# EUROPEAN PATENT SPECIFICATION

(11) **EP 2 271 515 B1**
(45) Date of publication and mention of the grant of the patent: **02.10.2013**
(21) Application number: 09730496.8
(22) Date of filing: 09.04.2009
(51) Int. Cl.: B60R 9/00, B60R 9/058

(54) **ROOF RACK FOR AUTOMOTIVE VEHICLES**
DACHGEPÄCKTRÄGER FÜR KRAFTFAHRZEUGE
GALERIE DE TOIT POUR VEHICULES AUTOMOBILES

(30) Priority: 11.04.2008 US 44320
(43) Date of publication of application: 12.01.2011
(73) Proprietor: Levi, Avraham Y., Eagan, Minnesota 55121 (US)
(72) Inventor: Levi, Avraham Y., Eagan, Minnesota 55121 (US)
(74) Representative: Potter Clarkson LLP
(86) International application number: PCT/US2009/002218
(87) International publication number: WO 2009/126286

(56) References cited:
- EP-A2- 1 205 357
- US-A- 3 848 785
- US-A- 3 888 398
- US-A- 3 920 167
- US-A- 4 778 092
- US-A1- 2006 191 968
- US-A1- 2006 237 500

## Description

### BACKGROUND OF THE INVENTION

### Field of the Invention:

The current invention generally relates to interconnecting extruded aluminum framework structures, and more particularly to a roof rack for automotive vehicles to be sold in kit form and used to facilitate carrying of materials. This design embodiment is readily adaptable to a variety of vehicle configurations.

### Background of the invention:

It is the common practice in the automotive roof rack industry to produce metal vehicle roof racks that comprises a single welded unit. Such units are difficult to ship and handle because of their size and weight. Further, these fixed configuration roof racks are not amenable to adaptation or minor modification during the manufacturing process. Therefore, the traditional rack configuration cannot be adapted to the slight variations from one automobile to the next. This is a great disadvantage to automobile manufactures and aftermarket-users in that they often result in reduced quality and fit in the final product.

The current invention overcomes many of the manufacturing difficulties of the prior art and provides auto manufacturers and aftermarket-users with convenience and reliability that is currently missing in the marketplace.

EP 1205357 describes a roof-rack for automotive vehicles comprising:
a) first and second lower side rails each including an extruded metal tube with an integrally formed channel defining a slot;
b) first and second upper side rails each including an extruded metal tube;
c) a plurality of vertical profiles for coupling the first lower side rail to the first upper side rail to form a left hand side rail assembly and the second lower side rail to the second upper side rail to form a right hand side rail assembly;
d) a plurality of crossbar members each comprising an elongate metal tubular extrusion with first and second ends;
e) a plurality of fasteners adapted for joining the first end portion of the crossbar members to the channel of the first lower side rail of the left hand side rail assembly and the second end of the crossbar members to the channel of the second lower side rail of the right hand side rail assembly with the side rail assemblies in parallel, spaced-apart relation; and
f) a plurality of supports adapted to clamp on selected ones of the crossbar members for affixing ones of the crossbar members to the vehicle's roof.

### SUMMARY OF THE INVENTION

In providing a strong, yet lightweight, roof rack for an automotive vehicle there is provided an assembly comprising first and second primary side rails and first and second secondary side rails that together form a pair of rack side members where each includes a primary side rail and a secondary side rail that are clamped together. The thus-formed side members are connected together in parallel, spaced relation by a plurality of crossbar members, wherein each of the crossbar members comprises an elongate, metal, tubular extrusion having opposed fastening ridges projecting laterally therefrom. A plurality of fasteners are used to join a first end portion of the crossbar member to the primary side rail of one side member and a second end portion of the crossbar member to the primary side rail of the opposed side member. A plurality of attachment members are subsequently used to affix the crossbar members to the roof of the vehicle.

The primary and secondary side rails comprise extruded metal tubing, preferably aluminum, and the primary side rails each have integrally formed channels defining a T-shaped slot where the channel projects laterally from a surface of the extruded metal tube comprising the primary side rails. The primary side rails further include a generally T-shaped spine that projects outwardly therefrom. The secondary side rails also each comprise an extruded metal tube with a T-shaped spine projecting outwardly therefrom. The aforementioned clamp members are specially shaped to engage the T-shaped spines on the primary and secondary rail members, thus holding them in generally parallel relationship.

The crossbar members, also comprising extruded metal tubes shaped to have an aerodynamic profile that minimizes wind resistance and noise when the vehicle bearing the rack is being driven at highway speeds.

Because of the adjustability of the components comprising the roof rack of the present invention, the rack assembly is readily adaptable to a wide variety of vehicle makes and models.

The extruded rails and their manner of interconnection provide a very high strength-to-weight ratio in that the width and thickness of the clamping members used to join the primary and secondary rail pairs can be chosen to meet expected load requirements since the spines to which the clamps attach extend the full length of the rails. The use of relatively thin wall tubing for the cross members backed up at attachment points with reinforcing inserts also reduces the overall weight of the finished assembly without sacrificing strength.

Other features and advantages of the invention will become apparent to those skilled in the art from the following detailed description of a preferred embodiment, especially when considered in conjunction with the accompanying drawings in which like numerals in the several views refer to corresponding parts.

### DESCRIPTION OF THE DRAWINGS

FIG. 1 is a perspective view of a completely assembled roof rack configuration made in accordance with the present invention;
FIG. 2a is a partial end view of a primary side rail depicting a connection with a crossbar member and with a roof anchor connection to the crossbar;
FIG. 2b is an exploded, partial view of the primary rail and crossbar connection and also showing the crossbar connection with the roof anchor;
FIG. 2c is a cross sectional view of the crossbar connection to the roof anchor, including the crossbar reinforcing element and side rail fastener;
FIG. 2d is a partial perspective view of a crossbar incorporating a reinforcing element;
FIG. 2e is an end view of the crossbar with reinforcing element and fastener;
FIG. 3 is an end view of a primary side rail depicting a connection by a side rail spacing clamp to a secondary side rail;
FIG. 4 is an exploded view showing a primary side rail, a side rail spacing clamp and a secondary side rail;
FIG. 5 is a cut-away perspective view of a front edge end cap for covering the primary and secondary side rails;
FIG. 6 is an exploded perspective view of the side rail spacing clamp and primary and secondary side rails;
FIG. 7 is a perspective view showing the side rail spacing clamp and primary and secondary side rails with the clamp engaged;
FIG. 8 is a perspective view showing the end cap closure for the rear of the roof rack;
FIG. 9 is a perspective view of an alternative attachment member used to secure the roof rack to the roof of a vehicle;
FIG. 10 is a drawing showing how the attachment member of FIG. 9 is assembled to a vehicle roof and the roof rack assembly;
FIG. 11 shows a further alternative attachment member for securing a roof rack to the rain gutter of an automotive vehicle; and
FIG. 12 is a perspective view showing the deployment of the attachment member of FIG. 11 in securing a roof rack assembly to a vehicle.

### DESCRIPTION OF A PERFERRED EMBODIMENT

This description of the preferred embodiments is intended to be read in connection with the accompanying drawings, which are to be considered part of the entire written description of this invention. In the description, relative terms such as "lower", "upper", "horizontal", "vertical", "above", "below", "up", "down", "top" and "bottom" as well as derivatives thereof (e.g., "horizontally", "downwardly", "upwardly", etc.) should be construed to refer to the orientation as then described or as shown in the drawings under discussion. These relative terms are for convenience of description and do not require that the apparatus be constructed or operated in a particular orientation. Terms such as "connected", "connecting", "attached", "attaching", "join" and "joining" are used interchangeably and refer to one structure or surface being secured to another structure or surface or integrally fabricated in one piece, unless expressively described otherwise.

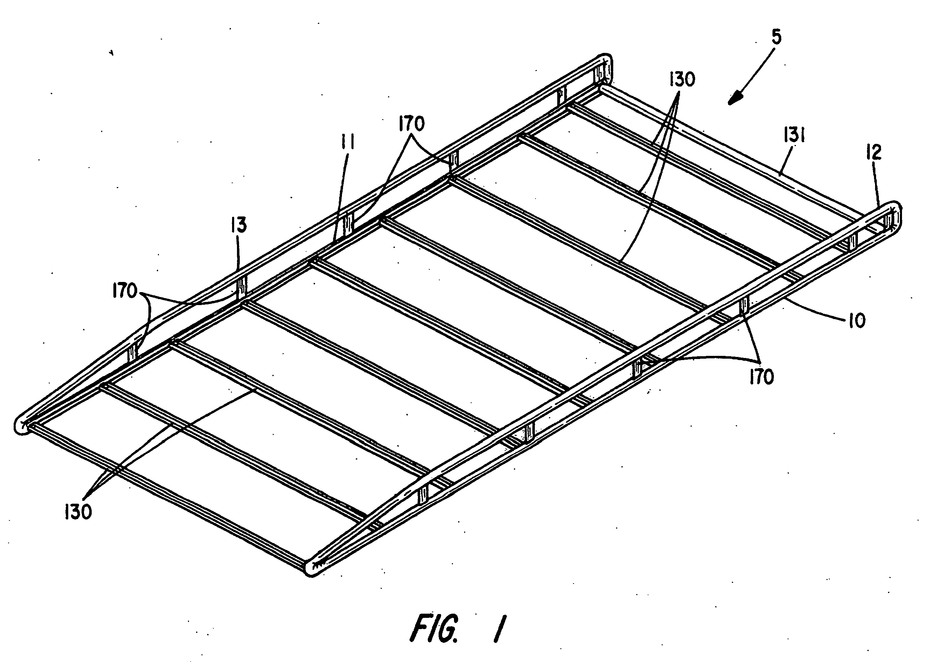

FIG. 1 provides a general perspective view of one possible embodiment for a roof rack 5 for the current invention. It possess (a) a right **10** and a left **11** primary side rail **110**, (b) a right **12** and a left **13** secondary side rail **140**, (c) a plurality of side rail spacing clamps **170** that connect the right primary side rail **10** to the right secondary side rail **12** and connect the left primary side **rail 11** to the left secondary side rail **13**, (d) a plurality of crossbar members **130** that connect the right primary side rail **10** to the left primary side rail **11**, and (e) a plurality of roof mounts.

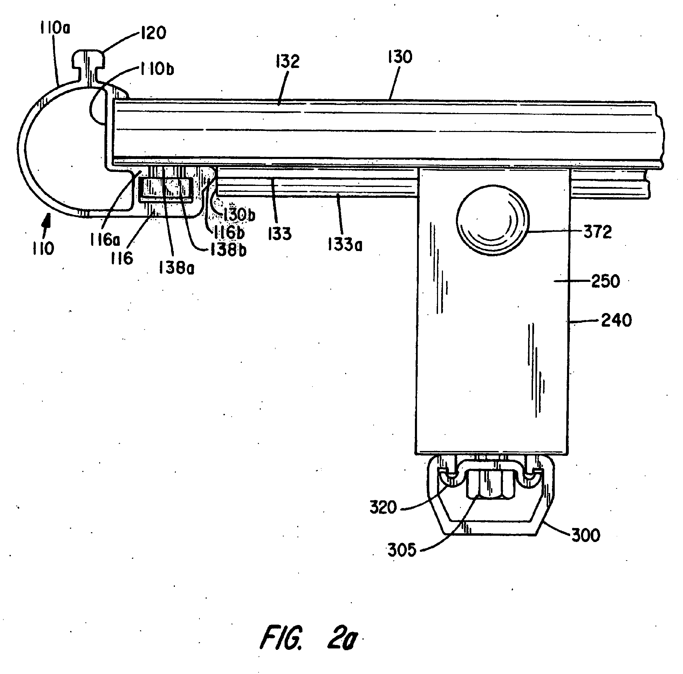

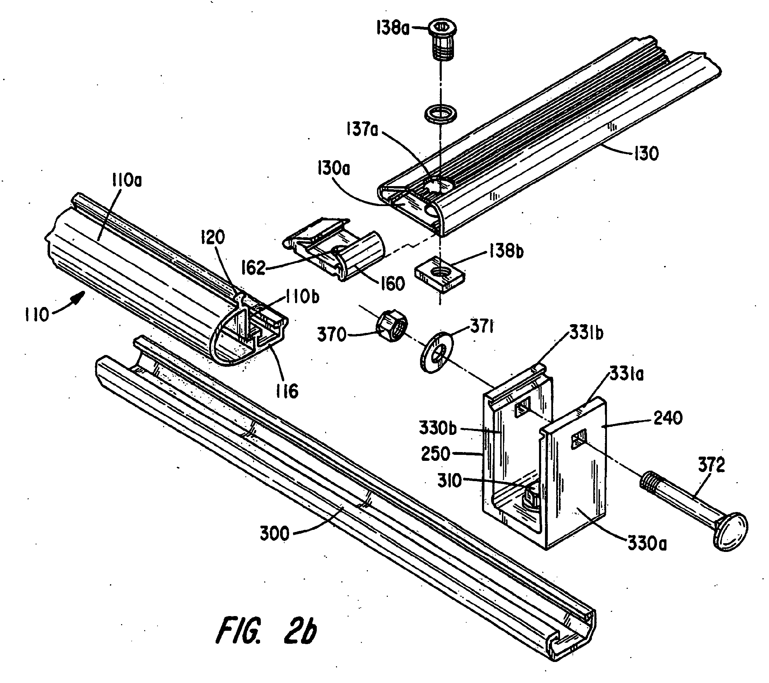

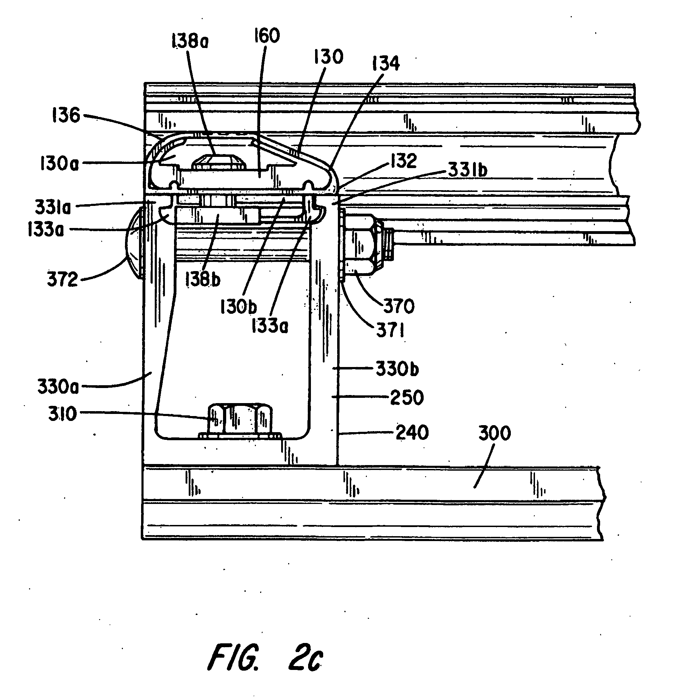

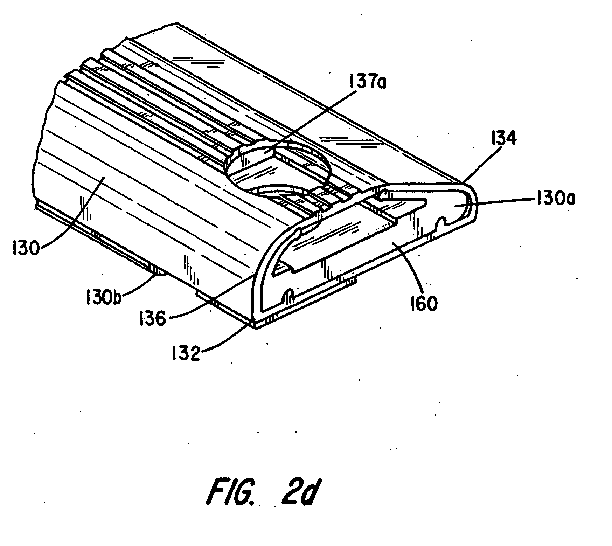

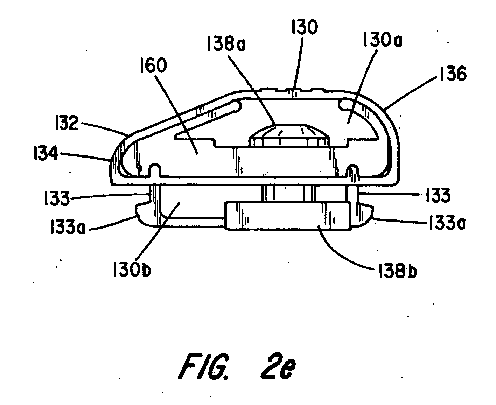

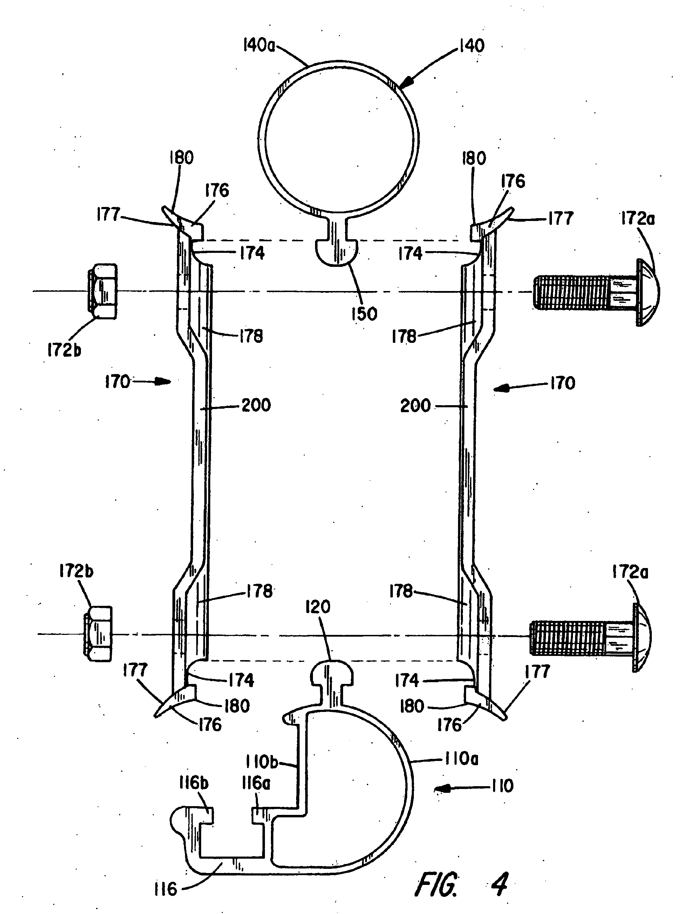

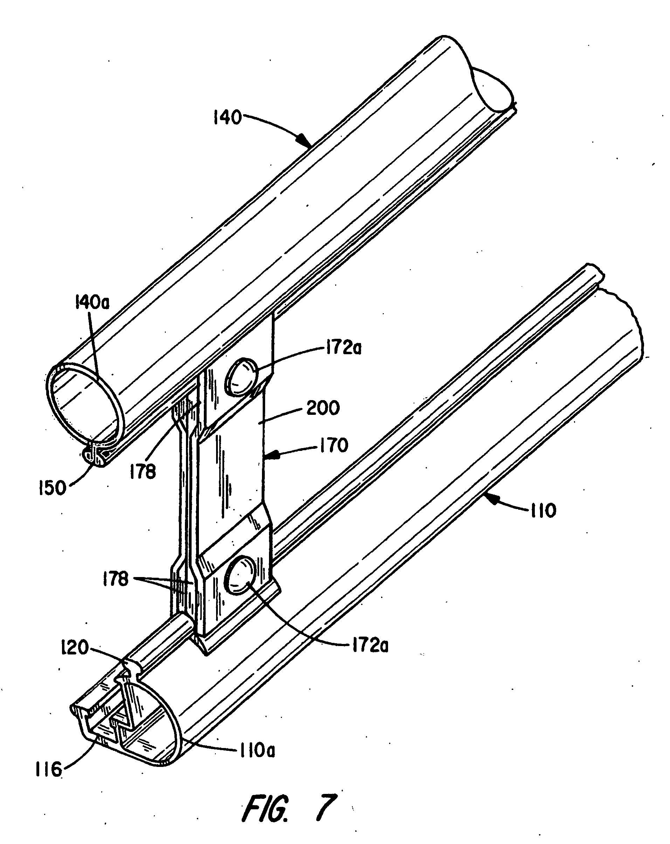

A roof rack embodiment of the current invention can be found in FIGs. 2-8. One general improvement of the current invention over the prior art relates to the application of continuous contact connections to increase the strength and improve the reliability of the fastening joints. Further, this fastening method allows manufacturers to take advantage of receiving roof rack kits as small box components as opposed to large fully welded, solid components.

One embodiment of the current invention is described as follows:

### Primary Side Rail (See FIGs. 2 a, 2 b, 3, 4, 5, 6, 7, and 8)

The pair of primary side rails **110** each comprises a generally hollow, somewhat "D" shaped, extruded tubular element, with a cross sectional design comprising a semi-circular wall **110a** with a vertical back member **110b**. The component is one of the central inventive configurations that form the system. The configuration provides great strength and stability to the entire rack framework owing to the combination of multiple, parallel, individual channels that add strength against deformitive forces.

Further, the multiple channels provide connection points over the entire length of the side rails. This allows for maximum configuration flexibility for a wide range of manufacturing needs. The wide range of configuration variability allows a manufacturer to adjust for major configuration requirements, i.e., going from one vehicle manufacturer's model to another. The invention also provides for making minor modification to adjust to slight variations observed in manufacturing hundreds of copies of the same model. The key is the ability to modify the connection points along the entire length of the component.

The primary side rail **110** possesses a cross member attachment channel **116**. The channel **116** emanates from and is contiguous with the vertical back member **110b** of the D-shaped cross-section. As seen in the figures identified above, the channel **116** is generally rectangular in cross section, possess an upper right flange **116a** and an upper left flange **116b**. A gap is defined between the right **116a** and left **116b** flanges of the attachment channel **116**. The gap provides a means for accessing the channel **116**, and the access runs the entire length of the side rail **110**. As will be discussed below, the gap provides the means for a bolt to access the internal chamber of the channel **116** and thus provide leverage against a uniquely configured fastening bar **138b**.

As pointed out above, the continuous access is one important aspect of the invention. Channel **116** forms an adjustable attachment point on both ends of a plurality of crossbar members **130**. Further, the right and left primary side rails, of a complete roof rack, have identical, but mirror image, configurations when viewed from either the front or back of the assemble rack. No separate manufacturing of right and left pieces is required. The mirror image configuration is achieved simply by rotating the rail end for end.

The primary side rail **110** also, possesses a first, approximately T-shaped attachment spine **120** emanating from and contiguous with the outer surface of the semi-circular wall **110a**. The attachment spine **120** is configured to reside along a parallel axis that is approximately 90 degrees to the horizontal of the **116** channel. The precise contours of the attachment spine **120** are designed to precisely cooperate with a uniquely configured attachment clamp **170** as discussed below.

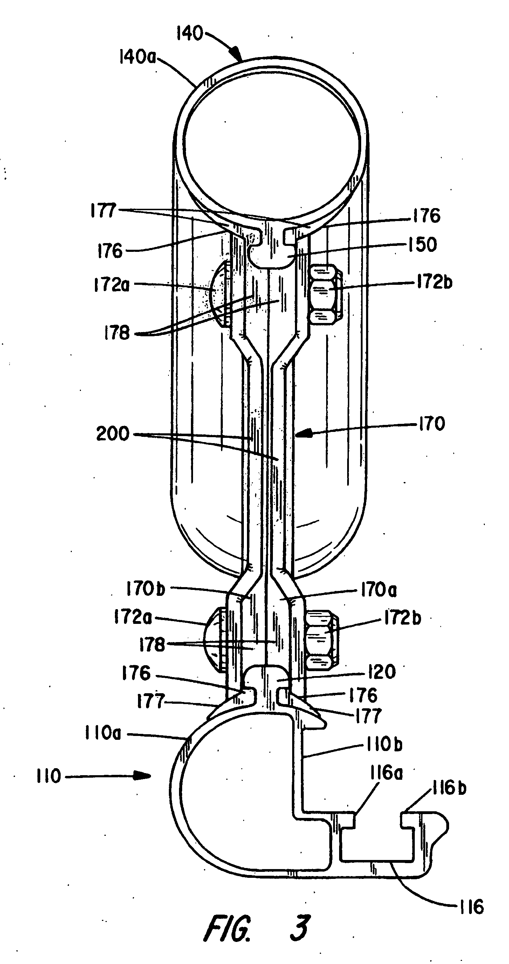

### Secondary Side Rail (See FIGs. 3, 4, 5, 6, 7)

The next element in the current configuration is a secondary side rail **140**. The secondary side rail **140** is a generally hollow tubular extruded element, also preferably of aluminum, with a cross sectional design comprising a circular wall **140a**. The side rail **140** also possesses a second approximate T -shaped attachment spine **150**. The spine **150** comprises a part of the extrusion **141** and emanates from and is contiguous with the outer surface of the side wall **140a**. The contours of the second attachment spine **150** are also precisely designed to cooperate with a uniquely designed attachment clamp **170**. The contours of spine **150** may be the same or different contour from the contour for the first attachment spine **120** even though the present figures use a single configuration shape.

The secondary side rail **140** further possesses a bend or deflection near one end of the rail that ultimately is at the front of the vehicle roof once the rack is mounted. As can be seen in FIG. 1, this is done for both issues of style and aerodynamics. The application of a sloped nose significantly reduces noise from the wind thrown off the windshield. It also helps to blend the rack into the visual lines of the vehicle. Even so, it is understood that any configuration is possible and the invention is not limited to a sloped nose front configuration.

### Side Rail Spacing Clamps (See FIGs. 3, 4, 6, 7)

The next element is a two-piece side rail spacing clamp system **170**. The individual clamps are designed with a unique contact mechanism that takes advantage of a semi-circular cross sectional end **176** configured with a radius slightly smaller that the radius of the element it contacts. The design also possesses a central void **174** defined by the configuration of the clamp shoulders **178** and specifically shaped to accommodate the primary or secondary side rail T-spine, while at the same time the clamp ends **176** forms a concave surface **180** to make contact with the complimentary shaped exterior wall of either the primary side rail **110a** or the secondary side rail **140a** on either side of the respective T-spine **120**, **150**. The concavity of the clamp end is designed to have a slightly reduced radius in relation to the curvature of the primary side rail **110a** or the secondary side rail **140a**. This results in a slight "bite" from the clamp on the outer surface of the primary side rail **110a** or the secondary side rail **140a** as the clamp **170** is tightened.

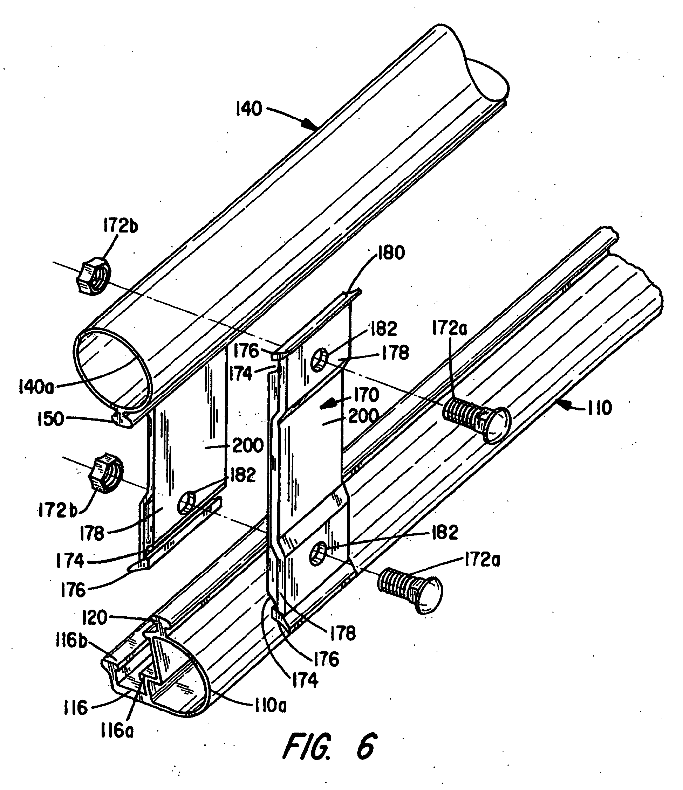

As indicated above, the clamp **170** has clamp shoulders **178**. As seen in FIG. 6, the shoulders **178** are so configured to define a hole **182** through which a first threaded bolt **172a** may pass. The first threaded bolt **172a** will accept threaded nut **172b** to facilitate tightening the clamp. The shoulder configuration plays an important part in the strength of the connection between the side rails. The thickness of the shoulder is maintained only so much as is necessary to prevent deformation of the clamp ends without adding unnecessary weight. Further, the force applied to the side rails is generated from the cinching of the bolt **172a** and the nut **172b**. This force must be evenly distributed against the T-spine and exterior walls of the rail to optimally form a wedge function that holds the rails locked firmly in place.

The clamp **170** may be ordered in a number of height dimensions that are modified through configuration of the spacer region **200**. Increasing or decreasing the height of this region allows for greater or lesser separation between the primary side rail **110** or the secondary side rail **140**. This feature allows for a wide variety of configurations and applications, while limiting the need to modify part configurations to the clamp **170**. The clamp can also be produced in varying width dimensions that can be increased or decreased to create a variety of concave channel **180** lengths. An increase in the channel width **180** will increase the strength and stability of the connection between the clamp **170** and side rail **110**,**140**. The instant embodiment shows one set configuration for the clamp **170**, but it is within the scope of the present invention to cover a variety of other clamp sizes and configurations.

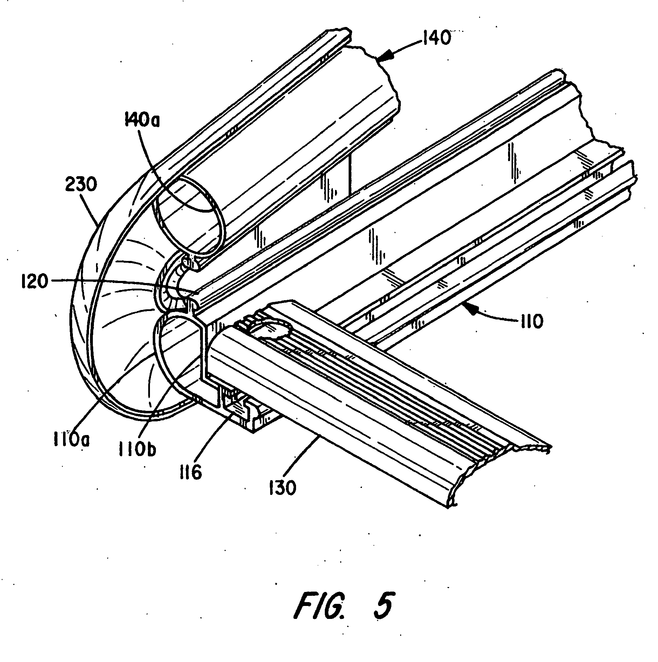

### Crossbar Member (See FIGs. 2a, 2b, 2c, 2d, 2e, and 5)

The next element of the rack assembly to be considered is a dual channel crossbar **130**. The crossbar **130** owes its strength to a duel channel, over/under configuration. In this instance, the crossbar is defined as having a length dimension with "ends", a width dimension with "edges", and a height dimension with "top" and "bottom" in the standard orientation as viewed.

The primary channel of the crossbar member **130a** (Fig. 2e) is generally trapezoidal in cross sectional shape. Further, the primary channel **130a** is defined by the first crossbar wall **132**, with the wall **132** defining an extended trailing edge **134**. The trailing edge **134** faces rearward when the rack is vehicle mounted and is configured for aerodynamic advantages (reduced wind resistance and low noise). The wall **132** further defines a rounded leading edge **136**.

As shown in FIG. 2d, the primary channel wall **132** of the crossbar member defines a hole member **137a** therein. Another hole not visible in FIG. 2d is drilled in register through each end portion of the primary channel **130a**, through the top crossbar wall **132** and through the bottom crossbar wall **132**. The holes **137a** accommodates a second threaded bolt **138a** (FIG. 2d) that will removably attach a crossbar **130** to a primary side rail **110**. An important aspect of the current invention relates to the applications of a unique threaded fastening bar **138b** in place of a standard nut. This threaded fastening bar **138b** is generally of an elongated nature and thereby increases the contact surface area in which to cooperate with the internal and external flanges **116a**, **116b** of the primary side rail cross member attachment channel **116**. This greatly increases the strength of the individual joint connection and adds to the overall stability of the entire framework.

The secondary channel **130b** (Fig. 2a) is generally rectangular in cross sectional shape, and defined by a second crossbar wall **133**. As seen in FIGs. 2a, 2c, and 2e, the crossbar wall **133** configuration defines a fastening ridge **133a** to accommodate attachment of a roof clamp means **250**. The secondary channel **130b** need not extend the full length of the crossbar member **130**, but may end so as to not interfere with the attachment of the crossbar member **130** to the primary side rail member **110**. For example, in FIG. 2d the primary channel **130a** extends beyond the end of the secondary channel **130b** by the width defined from the vertical back member **110b** to the external most point of the channel **116**. This is the preferred configuration because it provides a snug fit for the primary side rail **110** and the crossbar **130**.

Numeral **131** refers to a roller disposed at the rear end of the rack assembly rather than to a crossbar member. The roller facilitates loading longer objects, such as ladders, heavy pipes, etc. onto the vehicle rack.

### Reinforcing Element (See FIGs. 2b, 2c, 2d, 2e, and 5)

The next element of the assembly to be considered is the trapezoidal primary channel reinforcing element **160** best seen in FIGS. 2d and 2e. The reinforcing element **160** is inserted at or near the ends of the primary channel **130a**, the reinforcing element **160** has a generally rectangular shape that fits within the primary channel **130a**. The body of the reinforcing element **160** is configured so as to define a hole **162** that will act cooperatively with aligned holes **137a**, formed through the ends of the crossbar member **130** and second threaded bolts **138a**. The reinforcing element provides the additional strength needed at the point of attachment without adding unwanted additional weight that a solid member would possess. The element **160** has a pair of leaf spring legs **160a** and **160b** that serve to retain the reinforcing element in an aligned position with the holes **137a** prior to insertion of the fasteners **138a**.

### Primary Side Rail/Crossbar Fastener (See FIGs. 2a, 2b, 2c, and 2e)

Fastener elements **138a/138b** for connecting the crossbar **130** to the primary side rail **110** comprises a threaded bolt **138a** and a threaded contact member **138b** that is configured to reside within the confines of the primary side rail channel **116**. The length dimension of this contact member **138b** can be increased to increase the contact area with the flanges **116a, 116b**. Thus, one can increase the strength of the connection by increasing the extent of engagement with the flanges **116a, 116b** of the channel **116**.

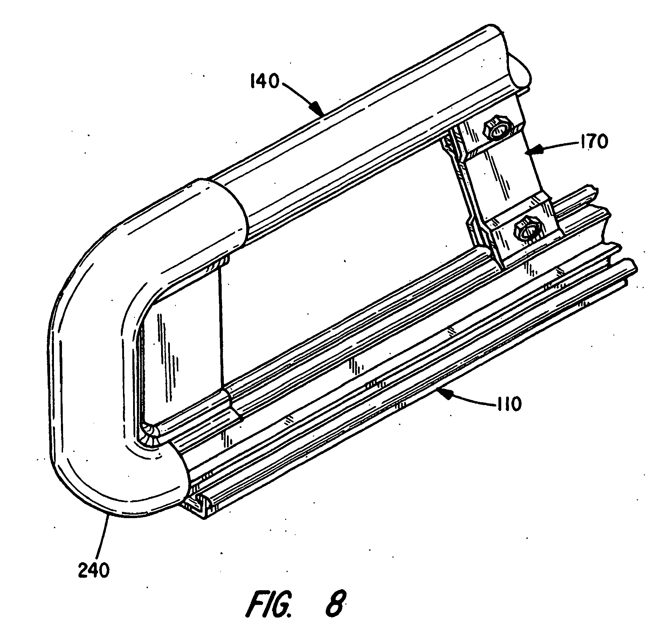

### End Caps (See FIGs. 5 and 8)

A front end cap **230** and a back end cap **240** are used to provide smooth termination to the opposed ends of the rack rails. The end caps satisfy two needs. They are added for both issues of style and aerodynamics. The application of a generally rounded front end cap **230** significantly reduces noise from the wind thrown off the windshield. The combination front **230** and back end **240** caps help to aesthetically blend the rack into the visual lines of the vehicle.

### Roof Attachment Members (See FIGs. 2a, 2b, 2c, 9, 10, 11 and 12)

Next to be considered are roof attachment members, a wide variety of configurations of which are available to accommodate any number of vehicle body styles and requirements. A first example is shown in FIGs. 2a and 2b. Here, a fastening mount **300** is fixedly attached to the roof of a vehicle. As depicted in FIG. 2a and 2b, a mounting bracket **250** is fixedly attached to the fastening mount **300** through the application of a standard nut **305** and bolt **310**, with a specialized bracket **320** designed to cooperatively engage the fastening mount **300**. The mounting bracket **250** possesses a pair of opposed engaging elements **330a** and **330b** with contact elements **331a** and **331b** so configured to cooperatively and fixedly contact the fastening ridge **133a** of a crossbar **130**. The fastening is achieved by cinching the opposed engaging elements **330a/ 330b** and corresponding contact elements **331a/331b** against the fastening ridge **133a** of a crossbar **130** through the use of a standard nut **370**, washer **371**, and bolt **372** configuration.

The roof rack assembly of FIG. 1 may be attached to the roof of an automotive vehicle in a variety of ways depending upon the vehicle manufacturer and model involved. In each instance, however, an attachment member will include a clamping structure adapted to cooperate with the fastening ridges **133a** of the crossbar members **130**.

FIGs. 2a and 2b illustrated a mounting structure for a vehicle having a generally flat, horizontal roof, allowing a pair of extruded metal rails having a T-shaped slot extending the length thereof to be bolted or otherwise affixed to the vehicle roof to extend parallel to the side edges thereof and inset a predetermined distance from the vehicle sides.

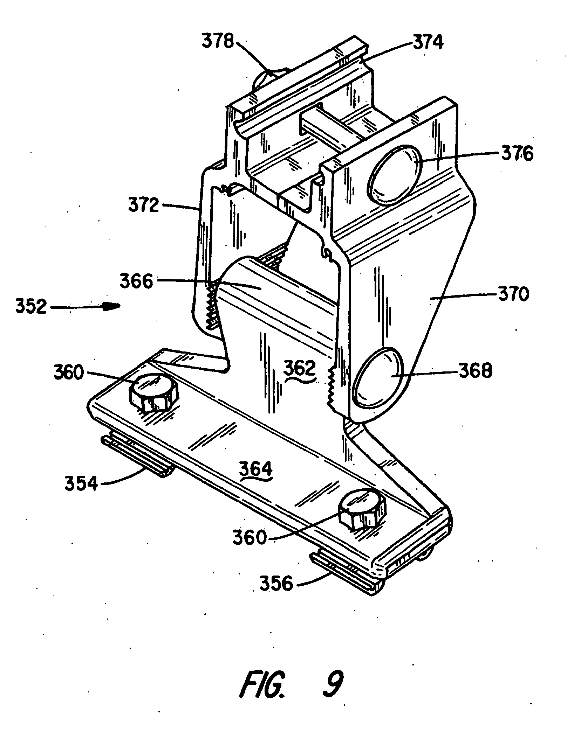

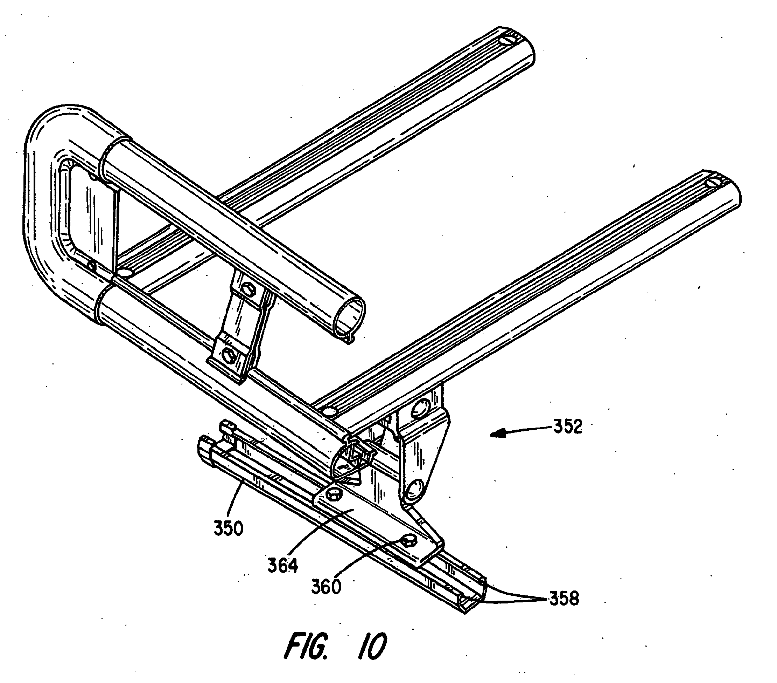

FIG. 9 shows an alternate mounting arrangement where the vehicle roof may have a somewhat curved contour, such that straight, elongated mounting rails like **300** in FIG. 2a cannot be used. Instead of using a single, continuous, elongated rail, two or more short length extruded rails as at **350** (FIG. 10) are applied to the vehicle roof at longitudinally spaced locations along the roofs length dimension. Then, adjustable mounting brackets indicated generally by numeral **352** in FIG. 9 are joined to the segmented rail members **350**. More particularly, the nuts **354** and **356** are especially shaped to mate with ridges **358** on the generally U-shaped mounting rails **350** allowing the mounting assembly **352** to be precisely longitudinally positioned before the bolts **360** are tightened.

The mounting bracket **352** provides for limited adjustment to accommodate level horizontal mounting of the rack assembly. More particularly, the mounting bracket assembly **352** comprises a base member **362** having an integrally formed base flange **364** and a rounded upper hinge portion **366**. The flange **364** rests upon the mounting rail **350** as seen in FIG. 10 and an elongated bolt **368** extends through clamp elements **370** and **372** acting as a hinge pin. This arrangement allows the clamp members **370** and **372** to be rotated about the bolt 368 as may be necessary to permit the grooves **374** formed in the upper end portions of the clamping members to engage the fastening ridges **133** on the crossbar members **130**. Once the roof rack assembly has been leveled, bolts **368** on the several mounting bracket assemblies employed may be tightened to maintain the set angularity and a nut and bolt combination **376-378** is cinched to squeeze the grooves **374** into tight engagement with the fastening ridges **133** on the crossbar members.

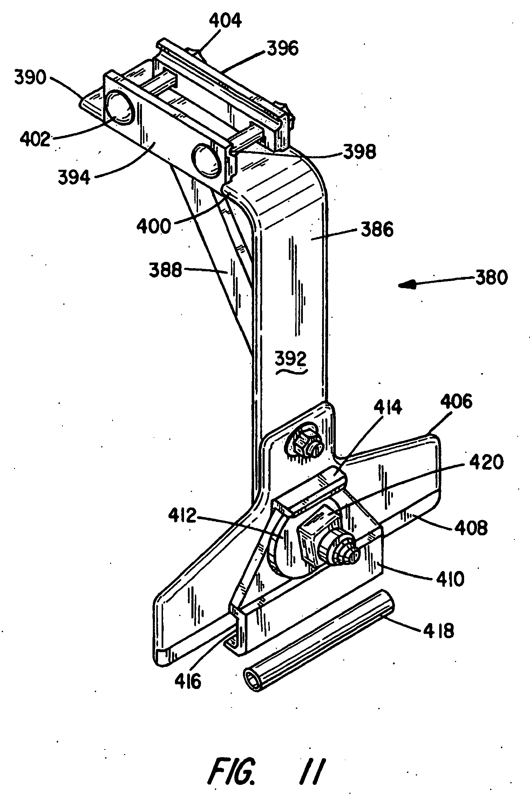

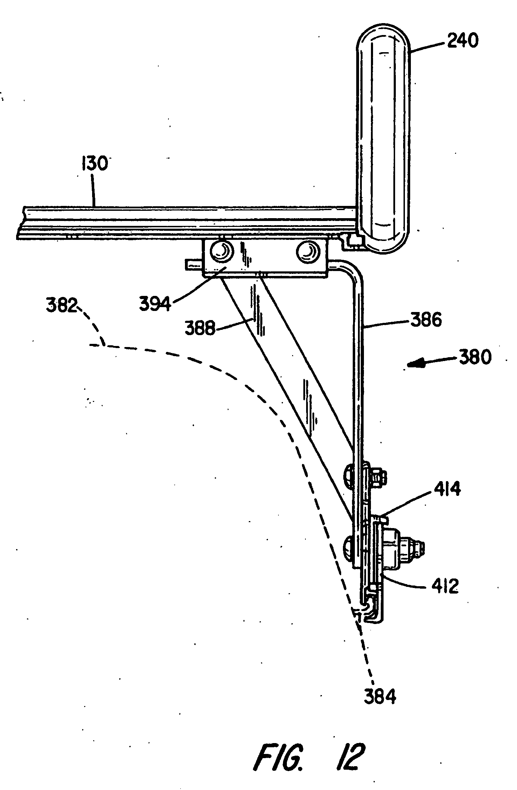

With certain vehicle models, it is desirable to affix the roof rack assembly to the rain gutters found on many vehicles that run parallel to the roof a slight distance down along the vehicle's side surfaces. To this end, the present invention provides a roof rack attachment assembly as indicated generally by numeral **380** in FIGS. 11 and 12. In FIG. 12, the roof line of the vehicle is identified by numeral **382** and a cross section of the rain gutter is identified by numeral **384**.

The mounting bracket assembly **380** is seen to comprise a L-shaped arm **386** having a gusset or brace **388** extending diagonally between the upper leg **390** and the lower leg **392** of the L-shaped arm.

Joined to the upper leg **390** are clamping jaws **394** and **396** each having a set of parallel grooves as at **398** and **400**. The grooves **400** are designed to engage the sides of the upper leg **390** while the grooves **398** are designed to mate with the attachment ridges **133** on the crossbar members. Clamping of the respective members is achieved using the threaded bolts as at **402** and nuts, **404**.

The lower arm **392** has a clamping plate **406** bolted to it and formed along the base of the plate 406 is a groove **408** which is configured to fit within the vehicle's rain gutter **384**. One of the bolts used to fasten the plate **406** to the leg **392** of the L-shaped arm also passes through a further clamping bracket **410** that is designed to engage the outer underside of the gutter and the outer surface of the gutter sidewall. In order to achieve a snug fit, an eccentric cam **412** mounted on the bolt is turned with a wrench. The cam acts against a shelf-like projection **414** on the clamping bracket **410** to lift this clamping bracket so that the gutter contained within the groove **416** of the clamping bracket will become firmly engaged. To prevent marring of the vehicle's paint, a split vinyl tube **418** may be placed over the gutter prior to the step of camming the clamping bracket **410** and the ultimate tightening of the fastening nut **420**.

This invention has been described herein in considerable detail in order to comply with the patent statutes and to provide those skilled in the art with the information needed to apply the novel principles and to construct and use such specialized components as are required. However, it is to be understood that the invention can be carried out by specifically different equipment and devices, and that various modifications, both as to the equipment and operating procedures, can be accomplished without departing from the scope of the invention itself.

## Claims

1. A roof rack (5) for automotive vehicles comprising:
a) first and second primary side rails (10, 11) each including an extruded metal tube (110) with an integrally formed channel (116) defining a T-shaped slot projecting laterally therefrom and a T-shaped spine (120) projecting outward from a peripheral surface (110a) of said metal tube (110);
b) first and second secondary side rails (12, 13) each including an extruded metal tube (140) with an integrally formed T-shaped spine (150) projecting outward from a peripheral surface (140a) of said metal tube (140);
c) a plurality of clamp members (170) for coupling the T-shaped spine (120) of the first primary side rail (10) to the T-shaped spine (150) of the first secondary side rail (12) to form a left hand composite side rail assembly and the T-shaped spine (120) of the second primary side rail (11) to the T-shaped spine (150) of the second secondary side rail (13) to form a right hand composite side rail assembly;
d) a plurality of crossbar members (130) each comprising an elongate metal tubular extrusion with first and second end portions and including opposed fastening ridges (133a) projecting laterally from the tubular extrusion along a length dimension thereof;
e) a plurality of fasteners (138a, 138b) adapted for joining the first end portion of the crossbar members (130) to the channel (116) of the first primary side rail (10) of the left hand composite side rail assembly and the second end portion of the crossbar members (130) to the channel (116) of the second primary side rail of the right hand composite side rail assembly with the side rail assemblies in parallel, spaced-apart relation; and
f) a plurality of attachment members (250) adapted to clamp onto said fastening ridges (133a) on selected ones of the crossbar members (130) for affixing ones of the crossbar members (130) to the vehicle's roof and where the left hand and right hand side rail assemblies are suspended entirely by the crossbar members (130).

2. The roof rack (5) of claim 1 wherein the first and second secondary side rails (12, 13) have a front edge portion bent to slope toward the primary side rail (10, 11) to which the secondary side rail is clamped by said clamp members (170).

3. The roof rack (5) as in claim 2 wherein the first and second secondary side rails (12, 13) have a generally circular cross-section.

4. The roof rack (5) of claim 1 wherein the extruded metal tube comprising the primary side member (110) has a generally D-shaped cross section with said integrally formed channel (116) projecting laterally from a straight back portion (110b) of the D-shaped cross section tube proximate a lower end thereof.

5. The roof rack (5) of claim 4 wherein said T-shaped spine (120) projects outward from an upper end of the straight back portion (110b) of the D-shaped cross section tube.

6. The roof rack (5) as in claim 1 wherein the crossbar members' (130) first and second end portions include reinforcing members (160) disposed therein.

7. The roof rack (5) as in claim 6 wherein the reinforcing members (160) include resilient legs (160a, 160b) for retaining the position of the reinforcing members (160) within a lumen of the tubular extrusion (110, 140) at the first and second end portions.

8. The roof rack (5) of claim 1 wherein the clamp members (170) each comprise a pair of metal straps each with a center shank portion (200) and offset end portions (178), the offset end portions (178) including recessed grooves (174), the pair of metal straps being fastened together with the shank portions (200) in back-to-back relation and with the T-shaped spine on the secondary rails (12, 13) disposed in the recessed grooves (174).

9. The roof rack (5) of claim 8 wherein the offset end portions (178) terminate in an arcuate segment (176) for abutting a peripheral surface (140a) of the extruded metal tube.

10. The roof rack (5) as in claim 1 and further including a front end cap (230) extending from a first end of each of the primary side rails (10, 11) to a first end of its associated secondary side rail (12, 13) and a rear end cap (240) extending from a second end of each of the primary side rails (10, 11) to the second end of its associated secondary side rail (12, 13).

11. The roof rack (5) as in claim 1 wherein the crossbar members (130) are aerodynamically shaped to minimize wind noise and resistance.

12. The roof rack (5) as in claim 1 and further including a roller (131) extending between the first and second primary side rails (10, 11) at a rearmost end of the roof rack (5).

13. The roof rack (5) of claim 1 wherein the plurality of attachment members (352) each comprise:
(a) a base member with an integrally formed base flange (364) extending generally perpendicularly to an upwardly extending hinge pin receiving portion (362);
(b) a pair of clamp members (370, 372) affixed to the hinge pin receiving portion (362) by a bolt (368) serving as a hinge pin, each of the pair of clamp members (370, 372) having oppositely facing jaws, said jaws including grooves (374) for receiving the fastening ridges (133a) of a crossbar member (130) therein;
(c) a further bolt (376) extending through aligned apertures in the oppositely facing jaws for cinching the jaws against the fastening ridges; and
(d) means (354, 360) for attaching the base flange to the vehicle roof.

14. The roof rack (5) of claim 1 wherein the plurality of attachment members each comprise a means for attaching crossbar members (130) of the roof rack (5) to a vehicle's rain gutters (384).

15. The roof rack (5) of claim 14 wherein means for attaching comprises:
(a) a generally L-shaped arm (386) having first and second leg portions;
(b) a pair of crossbar clamping jaws (394, 396) joined to said first leg;
(c) a gutter clamping plate (406) affixed to said second leg, said gutter clamping plate (406) having a lower end adapted to fit within the vehicle's rain gutter (384);
(d) a clamping bracket (410) mounted in abutting relationship to the gutter clamping plate (406) by a bolt passing through aligned apertures in the second leg, the gutter clamping plate (406) and the clamping bracket (410), said clamping bracket (410) including a channel (408) for surrounding the vehicle's rain gutter (384) on the three sides thereof; and
(e) an eccentric cam (412) also mounted on the bolt, which when rotated, urges the clamping bracket (410) and the lower end of the gutter clamping plate (406) into tight engagement with the vehicle's rain gutter (384).

## Patentansprüche

1. Dachträger (5) für Kraftfahrzeuge, umfassend:
a) erste und zweite primären Seitenholme (10, 11), die jeweils ein extrudiertes Metallrohr (110) mit einem einstückig ausgebildeten Kanal (116) umfassen, der einen T-förmigen Schlitz, der seitlich davon hervorsteht, und einen T-förmigen Grat (120), der nach außen von einer peripheren Oberfläche (110a) des Metallrohrs (110) hervorsteht, definiert;
b) erste und zweite sekundäre Seitenholme (12, 13), die jeweils ein extrudiertes Metallrohr (140) mit einem einstückig ausgebildeten T-förmigen Grat (150) umfassen, der nach außen von einer peripheren Oberfläche (140a) des Metallrohrs (140) hervorsteht;
c) eine Mehrzahl von Klemmelementen (170) zum Koppeln des T-förmigen Grats (120) des ersten primären Seitenholms (10) mit dem T-förmigen Grat (150) des ersten sekundären Seitenholms (12), um eine linke Seitenholmverbundanordnung zu bilden, und des T-förmigen Grats (120) des zweiten primären Seitenholms (11) mit dem T-förmigen Grat (150) des zweiten sekundären Seitenholms (13), um eine rechte Seitenholmverbundanordnung zu bilden;
d) eine Mehrzahl von Querträgerelementen (130), die jeweils eine langgestreckte rohrförmige Metallextrusion mit ersten und zweiten Endabschnitten umfassen und gegenüberliegende Befestigungsrippen (133a) umfassen, die seitlich von der rohrförmigen Extrusion entlang einer Längenausdehnung hiervon hervorstehen;
e) eine Mehrzahl von Verbindungsmitteln (138a, 138b), die angepasst sind zum Verbinden des ersten Endabschnitts der Querträgerelemente (130) mit dem Kanal (116) des ersten primären Seitenholms (10) der linken Seitenholmverbundanordnung und des zweiten Endabschnitts der Querträgerelemente (130) mit dem Kanal (116) des zweiten primären Seitenholms der rechten Seitenholmverbundanordnung, wobei sich die Seitenholmanordnungen in paralleler voneinander beabstandeter Beziehung befinden; und
f) eine Mehrzahl von Befestigungselementen (250), die angepasst sind, auf die Befestigungsrippen (133a) auf Ausgewählten der Querträgerelemente (130) geklemmt zu werden, um Ausgewählte der Querträgerelemente (130) an dem Dach des Fahrzeugs zu befestigen, und wobei die linken und rechten Seitenholmanordnungen vollständig von den Querträgerelementen (130) getragen werden.

2. Dachträger (5) gemäß Anspruch 1, bei dem die ersten und zweiten sekundären Seitenholme (12, 13) einen vorderen Randabschnitt aufweisen, der gebogen ist, um sich zu dem primären Seitenholm (10, 11) hin zu neigen, an dem der sekundäre Seitenholm durch die Klemmelemente (170) geklemmt ist.

3. Dachträger (5) gemäß Anspruch 2, bei dem die ersten und zweiten sekundären Seitenholme (12, 13) einen im Allgemeinen kreisförmigen Querschnitt aufweisen.

4. Dachträger (5) gemäß Anspruch 1, bei dem das extrudierte Metallrohr, das das primäre Seitenelement (110) umfasst, einen im Allgemeinen D-förmigen Querschnitt aufweist, wobei der einstückig ausgebildete Kanal (116) seitlich von einem geraden hinteren Abschnitt (110b) des Rohrs mit D-förmigem Querschnitt nahe einem unteren Ende hiervon hervorsteht.

5. Dachträger (5) gemäß Anspruch 4, bei dem der T-förmige Grat (120) nach außen von einem oberen Ende des geraden hinteren Abschnitts (110b) des Rohrs mit D-förmigem Querschnitt hervorsteht.

6. Dachträger (5) gemäß Anspruch 1, bei dem die ersten und zweiten Endabschnitte der Querträgerelemente (130) darin angeordnete Verstärkungselemente (160) umfassen.

7. Dachträger (5) gemäß Anspruch 6, bei dem die Verstärkungselemente (160) nachgiebige Schenkel (160a, 160b) zum Beibehalten der Position der Verstärkungselemente (160) innerhalb eines Hohlraums der rohrförmigen Extrusion (110, 140) an den ersten und zweiten Endabschnitten umfassen.

8. Dachträger (5) gemäß Anspruch 1, bei dem die Klemmelemente (170) jeweils ein Paar von Metallbändern jeweils mit einem mittigen Schaftabschnitt (200) und versetzten Endabschnitten (178) umfassen, wobei die versetzten Endabschnitte (178) ausgesparte Nuten (174) umfassen, wobei das Paar von Metallbändern zusammen mit den Schaftabschnitten (200) in Rücken-an-Rücken-Beziehung und mit dem T-förmigen Grat auf den sekundären Holmen (12, 13), die in den ausgesparten Nuten (174) angeordnet sind, befestigt ist.

9. Dachträger (5) gemäß Anspruch 8, bei dem die versetzten Endabschnitte (178) in einem bogenförmigen Segment (176) zum Anstoßen an eine periphere Oberfläche (140a) des extrudierten Metallrohrs enden.

10. Dachträger (5) gemäß Anspruch 1, der des Weiteren eine vordere Endkappe (230), die sich von einem ersten Ende von jedem der primären Seitenholme (10, 11) zu einem ersten Ende seines zugeordneten sekundären Seitenholms (12, 13) erstreckt, und eine hintere Endkappe (240)umfasst, die sich von einem zweiten Ende von jedem der primären Seitenholme (10, 11) zu dem zweiten Ende seines zugeordneten sekundären Seitenholms (12, 13) erstreckt.

11. Dachträger (5) gemäß Anspruch 1, bei dem die Querträgerelemente (130) aerodynamisch geformt sind, um Windgeräusche und Windwiderstand zu minimieren.

12. Dachträger (5) gemäß Anspruch 1, der des Weiteren eine Rolle (131) umfasst, die sich zwischen den ersten und zweiten primären Seitenholmen (10, 11) an einem hintersten Ende des Dachträgers (5) erstreckt.

13. Dachträger (5) gemäß Anspruch 1, bei dem die Mehrzahl von Befestigungselementen (352) jeweils umfasst:
(a) ein Basiselement mit einem einstückig ausgebildeten Basisflansch (364), der sich im Allgemeinen senkrecht zu einem nach oben erstreckenden Scharnierstift-Aufnahmeabschnitt (362) erstreckt;
(b) ein Paar von Klemmelementen (370, 372), die an dem Scharnierstift-Aufnahmeabschnitt (362) durch einen Bolzen (368) befestigt sind, der als ein Scharnierstift dient, wobei jedes des Paars von Klemmelementen (370, 372) gegenüberliegende Backen aufweist, wobei die Backen Nuten (374) zum Aufnehmen der Befestigungsrippen (133a) eines Querträgerelements (130) darin umfassen;
(c) einen weiteren Bolzen (376), der sich durch ausgerichtete Öffnungen in den gegenüberliegenden Backen zum Zusammenziehen der Backen gegen die Befestigungsrippen erstreckt; und
(d) Mittel (354, 360) zum Befestigen des Basisflansches an dem Fahrzeugdach.

14. Dachträger (5) gemäß Anspruch 1, bei dem die Mehrzahl von Befestigungselementen jeweils ein Mittel zum Befestigen von Querträgerelementen (130) des Dachträgers (5) an Regenrinnen (384) eines Fahrzeugs umfasst.

15. Dachträger (5) gemäß Anspruch 14, bei dem das Mittel zum Befestigen umfasst:
(a) einen im Allgemeinen L-förmigen Arm (386) mit ersten und zweiten Schenkelabschnitten;
(b) ein Paar von Querträger-Klemmbacken (394, 396), die mit dem ersten Schenkel verbunden sind;
(c) eine Rinnenklemmplatte (406), die an dem zweiten Schenkel befestigt ist, wobei die Rinnenklemmplatte (406) ein unteres Ende aufweist, das angepasst ist, um in die Regenrinne (384) des Fahrzeugs zu passen;
(d) eine Klemmhalterung (410), die in aneinanderstoßender Beziehung an der Rinnenklemmplatte (406) durch einen Bolzen angebracht ist, der durch ausgerichtete Öffnungen in dem zweiten Schenkel, der Rinnenklemmplatte (406) und der Klemmhalterung (410) läuft, wobei die Klemmhalterung (410) einen Kanal (408) zum Umgeben der Regenrinne (384) des Fahrzeugs auf den drei Seiten hiervon umfasst; und
(e) eine exzentrische Nocke (412), die ebenfalls an dem Bolzen angebracht ist, welche wenn gedreht, die Klemmhalterung (410) und das untere Ende der
Rinnenklemmplatte (406) in dichten Eingriff mit der Regenrinne (384) des Fahrzeugs drängt.

## Revendications

1. Galerie (5) de toit pour véhicules automobiles comprenant :
a) des premier et second rails latéraux primaires (10, 11) comprenant chacun un tube métallique extrudé (110) doté d'un canal (116) formé d'un seul tenant délimitant une fente en forme de T faisant latéralement saillie depuis celui-ci et d'un crochet (120) en forme de T faisant saillie vers l'extérieur depuis une surface périphérique (110a) dudit tube métallique (110) ;
b) des premier et second rails latéraux secondaires (12, 13) comprenant chacun un tube métallique extrudé (140) doté d'un crochet (150) en forme de T formé d'un seul tenant faisant saillie vers l'extérieur depuis une surface périphérique (140a) dudit tube métallique (140) ;
c) plusieurs éléments pinces (170) servant à accoupler le crochet (120) en forme de T du premier rail latéral primaire (10) au crochet (150) en forme de T du premier rail latéral secondaire (12) afin de former un ensemble rail latéral composite gauche et le crochet (120) en forme de T du second rail latéral primaire (11) au crochet (150) en forme de T du second rail latéral secondaire (13) afin de former un ensemble rail latéral composite droit ;
d) plusieurs éléments barres transversales (130) comprenant chacun une extrusion tubulaire métallique allongée dotée de première et seconde parties d'extrémité et comprenant des arêtes d'attache (133a) opposées faisant latéralement saillie depuis l'extrusion tubulaire le long de celle-ci ;
e) plusieurs attaches (138a, 138b) conçues pour relier la première partie d'extrémité des éléments barres transversales (130) au canal (116) du premier rail latéral primaire (10) de l'ensemble rail latéral composite gauche et la seconde partie d'extrémité des éléments barres transversales (130) au canal (116) du second rail latéral primaire de l'ensemble rail latéral composite droit, les ensembles rails latéraux étant disposés dans une relation espacée parallèle ; et
f) plusieurs organes de fixation (250) conçus pour être fixés sur lesdites arêtes d'attache (133a) des éléments barres transversales (130) sélectionnés pour fixer ces éléments barres transversales (130) à la galerie du toit et où les ensembles rails latéraux gauche et droit sont complètement suspendus par les éléments barres transversales (130).

2. Galerie (5) de toit selon la revendication 1 dans laquelle les premier et second rails latéraux secondaires (12, 13) possèdent une partie bord avant repliée pour s'incliner vers le rail latéral primaire (10, 11) auquel le rail latéral secondaire est fixé par lesdits éléments pinces (170).

3. Galerie (5) de toit selon la revendication 2 dans laquelle les premier et second rails latéraux secondaires (12, 13) présentent une coupe transversale globalement circulaire.

4. Galerie (5) de toit selon la revendication 1 dans laquelle le tube métallique extrudé comprenant l'élément latéral primaire (110) présente une coupe transversale globalement en forme de D, ledit canal (116) formé d'un seul tenant faisant latéralement saillie depuis une partie arrière droite (110b) du tube à coupe transversale en forme de D à proximité d'une extrémité inférieure de celui-ci.

5. Galerie (5) de toit selon la revendication 4 dans laquelle le crochet (120) en forme de T fait saillie vers l'extérieur depuis une extrémité supérieure de la partie arrière droite (110b) du tube à coupe transversale en forme de D.

6. Galerie (5) de toit selon la revendication 1 dans laquelle les première et seconde parties d'extrémité des éléments barres transversales (130) comprennent des éléments de renforcement (160) disposés dans celles-ci.

7. Galerie (5) de toit selon la revendication 6 dans laquelle les éléments de renforcement (160) comprennent des pattes élastiques (160a, 160b) destinées à maintenir la position des éléments de renforcement (160) dans une lumière de l'extrusion tubulaire (110, 140) au niveau des première et seconde parties d'extrémité.

8. Galerie (5) de toit selon la revendication 1 dans laquelle les éléments pinces (170) comprennent chacun une paire de bandes métalliques dotées chacune d'une partie corps central (200) et de parties d'extrémité décalées (178), les parties d'extrémité décalées (178) comprenant des rainures évidées (174), les deux bandes métalliques étant attachées ensemble avec les parties corps (200) selon une relation dos à dos et avec le crochet en forme de T sur les rails secondaires (12, 13) disposé dans les rainures évidées (174).

9. Galerie (5) de toit selon la revendication 8 dans laquelle les parties d'extrémité décalées (178) se terminent en un segment arqué (176) pour être contiguës à une surface périphérique (140a) du tube métallique extrudé.

10. Galerie (5) de toit selon la revendication 1 et comprenant en outre un chapeau d'extrémité avant (230) s'étendant d'une première extrémité de chacun des rails latéraux primaires (10, 11) à une première extrémité de son rail latéral secondaire (12, 13) associé et un chapeau d'extrémité arrière (240) s'étendant d'une seconde extrémité de chacun des rails latéraux primaires (10, 11) à la seconde extrémité de son rail latéral secondaire (12, 13) associé.

11. Galerie (5) de toit selon la revendication 1 dans laquelle les éléments barres transversales (130) sont de forme aérodynamique afin de réduire au minimum le bruit du vent et la résistance au vent.

12. Galerie (5) de toit selon la revendication 1 et comprenant en outre un rouleau (131) s'étendant entre les premier et second rails latéraux primaires (10, 11) au niveau d'une extrémité la plus arrière de la galerie (5) de toit.

13. Galerie (5) de toit selon la revendication 1 dans laquelle les multiples organes de fixation (352) comprennent chacun :
(a) un élément de base doté d'une bride de base (364) formée d'un seul tenant s'étendant de manière globalement perpendiculaire à une partie de réception (362) de tige d'articulation s'étendant vers le haut ;
(b) une paire d'éléments pinces (370, 372) fixées à la partie de réception (362) de tige d'articulation par un boulon (368) servant de tige d'articulation, chaque élément de la paire d'éléments pinces (370, 372) possédant des mâchoires opposées, lesdites mâchoires comprenant des rainures (374) destinées à recevoir les arêtes d'attache (133a) d'un élément barre transversale (130) ;
(c) un boulon supplémentaire (376) s'étendant dans des ouvertures alignées situées dans les mâchoires opposées pour sangler les mâchoires contre les arêtes d'attache ; et
(d) des moyens (354, 360) destinés à fixer la bride de base au toit du véhicule.

14. Galerie (5) de toit selon la revendication 1 dans laquelle les multiples organes de fixation comprennent chacun un moyen destiné à fixer des éléments barres transversales (130) de la galerie (5) de toit à une gouttière (384) du véhicule.

15. Galerie (5) de toit selon la revendication 14 dans laquelle le moyen de fixation comprend :
(a) un bras (386) globalement en forme de L possédant des première et seconde parties pattes ;
(b) une paire de mâchoires de fixation (394, 396) de barre transversale reliées à ladite première patte ;
(c) une plaque de fixation (406) de gouttière fixée à ladite seconde patte, ladite plaque de fixation (406) de gouttière possédant une extrémité inférieure conçue pour s'insérer dans la gouttière (384) du véhicule ;
(d) un support de fixation (410) monté selon une relation contiguë par rapport à la plaque de fixation (406) de gouttière par un boulon traversant des ouvertures alignées situées dans la seconde patte, la plaque de fixation (406) de gouttière et le support de fixation (410), ledit support de fixation (410) comprenant un canal (408) pour entourer la gouttière (384) du véhicule sur les trois côtés de celle-ci ; et
(e) une came excentrique (412) également montée sur le boulon, qui, lorsqu'elle tourne, pousse le support de fixation (410) et l'extrémité inférieure de la plaque de fixation (406) de gouttière en prise ferme avec la gouttière (384) du véhicule.
